# EUROPÄISCHE PATENTSCHRIFT

(11) **EP 3 741 898 B1**
(45) Veröffentlichungstag und Bekanntmachung des Hinweises auf die Patenterteilung: **02.08.2023**
(21) Anmeldenummer: 20173191.6
(22) Anmeldetag: 06.05.2020
(51) Int. Cl.: D06F 25/00, D06F 37/26

(54) **VORRICHTUNG ZUM WASCHEN UND TROCKNEN VON ZU WASCHENDEN UND ZU TROCKNENDEN OBJEKTEN UND VERFAHREN ZUM BETREIBEN EINER SOLCHEN VORRICHTUNG**
DEVICE FOR WASHING AND DRYING OBJECTS AND METHOD FOR OPERATING SUCH A DEVICE
DISPOSITIF DE LAVAGE ET DE SÉCHAGE DES OBJETS À LAVER ET À SÉCHER, ET PROCÉDÉ DE FONCTIONNEMENT D'UN TEL DISPOSITIF

(30) Priorität: 21.05.2019 EP 19382405
(43) Veröffentlichungstag der Anmeldung: 25.11.2020
(73) Patentinhaber: BSH Hausgeräte GmbH, 81739 München (DE)
(72) Erfinder: Capablo Sese, Joaquin Jesus, 50003 Zaragoza (ES); San Martin Sancho, Roberto, 31200 Estella (ES); Ziach, Marcin, Sosnowiec (PL)

(56) Entgegenhaltungen:
- WO-A1-2014/181493
- JP-A- 2011 087 614
- KR-A- 20180 055 420

## Beschreibung

Die vorliegende Erfindung betrifft eine Vorrichtung zum Waschen und Trocknen von zu waschenden und zu trocknenden Objekten und ein Verfahren zum Betreiben einer solchen Vorrichtung.

Vorrichtungen zum Waschen und Trocknen von zu waschenden und zu trocknenden Objekten sind insbesondere als Wäschetrockner bekannt. Gegenüber gewöhnlichen Waschmaschinen bzw. Trocknern ist einer solche Vorrichtung die Befähigung zu eigen, dass sie Objekte waschen und trocknen kann. Hierzu umfassen entsprechende Vorrichtungen ein Trommelelement, das in einem Rohrelement rotierbar gelagert ist, und einen Zirkulationskanal, mit dem Heißluft durch das Trommelelement durchgeführt werden kann. Dadurch ist es möglich, zum einen in einem ersten Zustand die Wäsche zu waschen und in einem zweiten Zustand die Objekte zu trocknen. Konstruktionsbedingt ist es allerdings erforderlich, dass zwischen dem Trommelelement und dem Rohrelement ein Zwischenraum ausgebildet ist, um die rotierende Lagerung des Trommelelements für den ersten Zustand zu gewährleisten.

Dies wirkt sich allerdings nachteilhaft im zweiten Zustand, der für das Trocknen vorgesehen ist, aus, insofern, als dass insbesondere bei hohen Mengen an Objekten, die zum Trocknen vorgesehene Luftströmung, insbesondere Heißluftströmung über den Zwischenraum ausweicht und so nicht effektiv zum Trocknen der Objekte beitragen kann. Um die Effizienz solcher Vorrichtungen zum Waschen und Trocknen zu steigern, kennt der Stand der Technik insbesondere Dichtelemente, die verhindern sollen, dass die Luftströmung, die zum Trocknen vorgesehen ist, über den Zwischenraum das Trommelelement umgeht.

Beispielsweise nennt die WO 18 093 205 A2 eine Labyrinthdichtung, die im Eingangsbereich des Trommelelements angeordnet ist. Auch die JP 2011 087 614 schlägt eine Labyrinthdichtung vor, die zumindest teilweise an einer Stirnfläche des Trommelelements ausgebildet ist. Aus der JP 8 240 385 ist zudem die Verwendung einer Bürstendichtung bekannt, die zumindest teilweise parallel zur Rotationsachse, um die das Trommelelement rotiert, verläuft. Aus der WO 14 181 493 A1 ist zudem ein Dichtelement bekannt, das konzentrisch eine Einlassöffnung umgibt, über die wiederum die Luftströmung in das Trommelelement, insbesondere über dessen Stirnseite, eingeführt werden kann.

Hiervon ausgehend macht es sich die vorliegende Erfindung zur Aufgabe, eine alternative Möglichkeit bereitzustellen, mit der effektiv und wirkungsvoll ein Umströmen des Trommelelements vermieden werden kann, um so die Effizienz des Trocknens der Vorrichtung zum Waschen und Trocknen zu verbessern.

Diese Aufgabe wird durch eine Vorrichtung gemäß Anspruch 1 und einem Verfahren gemäß Anspruch 10 gelöst. Weitere Vorteile und Merkmale beispielhafter Ausführungsformen sind den Unteransprüchen und der Figurenbeschreibung zu entnehmen.

Gemäß einer ersten Ausführungsform ist eine Vorrichtung zum Waschen und Trocknen von zu waschenden und zu trocknenden Objekten, insbesondere Kleidungsstücken, vorgesehen wobei die Vorrichtung zwischen einem ersten Zustand zum Waschen und einem zweiten Zustand zum Trocknen überführbar ist, umfassend
- ein Trommelelement zur Aufnahme der Objekte,
- ein Rohrelement, wobei das Trommelelement in dem Rohrelement um eine Rotationsachse rotierbar gelagert ist, und
- ein Zwischenraum, der sich zwischen dem Rohrelement und dem Trommelelement ausbildet,
wobei zur Reduktion und/oder Vermeidung einer Strömung im Zwischenraum im zweiten Zustand der Vorrichtung der Zwischenraum mit einem das Trommelelement umgebenden Dichtelement abgedichtet ist.

Das Rohrelement kann zum Beispiel ein Laugenbehälter sein. Gegenüber den aus dem Stand der Technik bekannten Vorrichtungen zum Waschen und Trocknen von zu waschenden und zu trocknenden Objekten lässt sich durch das das Trommelelement umschließende, insbesondere vollständig umschließende, Dichtelement eine vergleichsweise wirkungsvolle Abdichtung des Zwischenraums realisieren, die es verhindert, dass der Luftstrom, insbesondere der Heißluftstrom, über den Zwischenraum außerhalb des Trommelelements geführt werden kann. Dabei ist das Dichtelement insbesondere derartig konfiguriert, dass eine elastische Deformation im Betrieb während des ersten Zustands radiale Lageänderungen des Trommelelements kompensieren kann. Insbesondere umläuft das Dichtelement das Trommelelement, d. h. um das Trommelelement herum ist an dessen Außenumfang, insbesondere an dessen Mantelfläche, bzw. an dessen Mantelfläche, das Dichtelement angeordnet. Mit anderen Worten: das Dichtelement erstreckt sich in einer Ebene, die senkrecht zur Rotationsachse verläuft, um die das Trommelelement rotierbar gelagert ist. Vorzugsweise ist dem Dichtelement ein Krümmungsradius zuzuordnen der größer ist als ein Krümmungsradius des Trommelelements, bezogen auf die Rotationsachse. Dabei erweist sich das Dichtelement beispielsweise auch im ersten Zustand als hilfreich, insbesondere beim Luftwärmen während des Waschens.

Grundsätzlich ist jeder Typ von Wäschetrockner als Vorrichtung zum Waschen und Trocknen der zu waschenden und zu trocknenden Objekte vorstellbar, wie z. B. solche die eine Wärmepumpe, Luftkondensation mit elektrischer Heizung, Wasserkondensation mit elektrischer Heizung und/oder solche die warme feuchte Luft abführen. Insbesondere hat sich herausgestellt, dass ein Ausweichen des Luftstroms über den Zwischenraum verstärkt auftritt, wenn die Vorrichtung vergleichsweise voll beladen ist. Dabei nutzt der Luftstrom beispielsweise verstärkt einen Spalt zwischen dem Trommelelement und dem Rohrelement, der zwischen einer zweiten Abschlussfläche und einer Stirnfläche des Trommelelements auf der einer Öffnungsklappe zugewandten Seite ausgebildet ist, d.h. insbesondere in dem Bereich, über den die Objekte in das Trommelelement eingeführt werden.

Vorzugsweise umfasst das Trommelelement eine Mantelfläche, die abgeschlossen wird durch gegenüberliegende Stirnflächen. Dadurch wird innerhalb des Trommelelements ein Aufbewahrungsraum für die Objekte bereitgestellt, die in der Vorrichtung zu trocknen und zu waschen sind. Über eine Öffnungsklappe, die im Nichtbetriebszustand der Vorrichtung geöffnet werden kann, lassen sich dann die Objekte in das Trommelelement einführen. Das Rohrelement seinerseits umschließt das Trommelelement und weist eine Mantelfläche auf, die insbesondere konzentrisch zur Mantelfläche des Trommelelements angeordnet ist, wobei das Rohrelement durch stirnseitig ausgebildete Abschlussflächen, insbesondere durch eine erste und eine zweite Abschlussfläche, abgeschlossen bzw. begrenzt wird. Beispielsweise weist die Vorrichtung zum Waschen und Trocknen eine Rotationsachse auf, die horizontal, schräg oder vertikal ausgerichtet ist. Weiterhin ist es vorgesehen, dass die Vorrichtung zum Waschen und Trocknen von zu waschenden und zu trocknen Objekten ein Zirkulationskanal aufweist, der zusammen mit dem Trommelelement einen geschlossenen Kreislauf bildet, in dem eine Luftströmung zirkulierend durchgeführt wird. Dabei umfasst der Zirkulationskanal einen Eintrittsbereich über den die Luftströmung in das Trommelelement eintritt und einen Austrittsbereich, über den die Luftströmung aus dem Trommelelement austritt und in den Zirkulationskanal gelangt. Die aus dem Trommelelement austretende Luftströmung wird im Zirkulationskanal dann komprimiert und/oder beheizt, sodass im Eintrittsbereich einem Innenraum des Trommelelements warme Luft zur Verfügung gestellt wird, die beim Durchtritt durch das Trommelelement die zu trocknenden Objekte trocknet. Weiterhin ist es bevorzugt vorgesehen, mehrere Dichtelemente in axialer Richtung gesehen hintereinander anzuordnen, wobei jedes dieser Dichtelemente das Trommelelement teilweise oder vollständig umgibt bzw. umschließt.

Vorzugsweise ist es vorgesehen, dass das Dichtelement in axialer Richtung gesehen (bezogen auf die Rotationsachse) im Bereich der Stirnseite des Trommelelements angeordnet ist, der dem Eintrittsbereich zugewandt ist und/oder dem Austrittsbereich zugewandt ist, wobei das Dichtelement gegenüber der Stirnseite versetzt ist und an der Mantelfläche anliegt. Insbesondere ist das Dichtelement der jeweiligen Stirnfläche gegenüber axial versetzt in Richtung der Mitte des Trommelelements oder bildet einen bündigen Abschluss mit der Stirnfläche des Trommelelements. Weiterhin ist es vorstellbar, dass Öffnungen und/oder Perforationen in der Mantelfläche des Trommelelements abgestimmt sind mit der Position des Dichtelements in axialer Richtung. So ist es vorstellbar, dass das Dichtelement in einem Bereich der Mantelfläche des Trommelelements angeordnet ist, welcher der Stirnseite zugewandt ist, die an den Austrittsbereich des Zirkulationskanals angrenzt. Ferner ist es denkbar, dass keine weiteren Perforationen und/oder Öffnungen zwischen dem Dichtelement und dieser Stirnseite vorgesehen sind, wodurch eine entsprechend zweckmäßige Abdichtung realisierbar ist. Ferner ist es vorgesehen, dass ein Abstand des Dichtelements von der Stirnseite zur eine Gesamtlänge des Dichtelements einen Wert zwischen 0.8 und 1, bevorzugt 0,85 und 0,95 und besonders im Wesentlichen 0,9 annimmt

Gemäß einer bevorzugten Ausführungsform ist es vorgesehen, dass das Dichtelement mit einem ersten Ende mit dem Rohrelement und mit einem zweiten Ende mit dem Trommelelement verbunden ist und/oder wobei das Dichtelement bogen- oder ringförmig ausgebildet ist. Insbesondere ist es vorgesehen, dass das Dichtelement mit dem ersten Ende am Rohrelement, insbesondere an dessen Innenseite, angebunden ist und mit dem zweiten Ende am Trommelelement, insbesondere an dessen Außenseite der Mantelfläche, aufliegt, oder andersrum. Dabei ist es insbesondere vorgesehen, dass das Dichtungselement in radialer Richtung gesehen durchgehend ausgeformt ist, das heißt insbesondere nicht als Dichtlabyrinth ausgebildet ist. Es ist aber auch vorstellbar, dass das Dichtelement derartig ausgestaltet ist, dass das erste Ende am Rohrelement und das zweite Ende am Trommelelement angebunden ist, d. h. integral damit verbunden ist, und nicht nur an einem der Enden aufliegt bzw. dieses kontaktiert. In diesem Fall könnte das Dichtelement beispielweise zwei Dichtteile, die jeweils an das Trommelelement und das Rohrelement angebunden sind, umfassen, die sich kontaktieren, insbesondere im Zwischenraum dichtend in Kontakt stehen. Weiterhin ist es vom Vorteil, ein ringförmiges Dichtelement zu benutzen, so dass entsprechend der ringförmige Spalt zwischen dem Rohrelement und dem Trommelelement, zumindest in radialer Richtung gesehen, verfüllt werden kann. Dabei ist der ringförmige Spalt durch die konzentrische Ausgestaltung der Mantelfläche des Rohrelements und der Mantelfläche des Trommelelements bedingt. Durch diese Anordnung wird zudem ein vereinfachter Zugang zu dem Dichtelement ermöglicht und auch die Montage des Dichtelements in der Fertigung wird vereinfacht.

In einer bevorzugten Ausführungsform ist es vorgesehen, dass das Dichtelement elastisch deformierbar ist. Dadurch ist es in vorteilhafter Weise möglich, eventuell betriebsbedingte radiale Verschiebungen des Trommelelements zu kompensieren und trotzdem sicherzustellen, dass im zweiten Zustand eine Abdichtung gewährleistet ist. Weiterhin ist es vorstellbar, dass das Dichtelement nicht vollständig an dem Trommelelement bzw. dem Rohrelement anliegt, sondern beispielsweise nur partiell.

In einer bevorzugten Ausführungsform ist es vorgesehen, dass das Dichtelement bezogen auf die Rotationsachse in dem sich in radialer Richtung zwischen dem Rohrelement und dem Trommelelement erstreckenden Zwischenraum angeordnet ist. Das heißt, das Dichtelement ist insbesondere nicht im Bereich der Stirnseiten bzw. zwischen den Stirnseiten des Trommelelements und den stirnseitigen Abschlussflächen des Rohrelements angeordnet, wie es üblicherweise bei den Dichtelementen zum Abdichten des Zwischenraums aus dem Stand der Technik bekannt ist, sondern anliegend an einer Mantelfläche des insbesondere annähernd zylindrischen Rohrelements bzw. Trommelelements. Entsprechend stellt die entsprechende Ausrichtung eine wirkungsvolle Alternative dar, mit der für den Luftstrom ein Umgehen des Trommelelements durch den Zwischenraum verhindert werden kann.

Vorzugsweise ist es vorgesehen, dass das Dichtelement eine Bürstendichtung und/oder eine Gummilippe umfasst. Sowohl Bürstendichtungen als auch Gummilippen erweisen sich als ausreichend flexibel, um etwaige Versetzungen in radialer Richtung des Trommelelements kompensieren zu können. Zudem gewährleisten sie eine wirkungsvolle Abdichtung des Zwischenraums. Beispielsweise hat sich gezeigt, dass mittels einer Bürstendichtung zum Abdichten des Zwischenraums die Trocknungszeit von 29 Minuten pro Kilogramm auf 20 Minuten pro Kilogramm verbessert werden konnte, d. h. die Trocknungszeit lässt sich in vorteilhafter Weise reduzieren. Dabei wird bevorzugt eine Bürstendichtung verwendet, die beispielsweise in der Turbinentechnologie genutzt wird.

Weiterhin ist es bevorzugt vorgesehen, dass der Eintrittsbereich des Zirkulationskanals im Bereich der Öffnungsklappe der Vorrichtung zum Waschen und Trocknen angeordnet ist, über die das Trommelelement mit den Objekten gefüllt werden kann. Entsprechend wird der Zirkulationsstrom bzw. der Luftstrom von einer Vorderseite der Vorrichtung zu einer Rückseite der Vorrichtung geführt. Es ist auch vorstellbar, dass der Luftstrom in entgegengesetzter Richtung erfolgt, das heißt an einer Rückseite der Vorrichtung erfolgt der Eintritt in das Trommelelement und an der Vorderseite erfolgt ein Austritt des Luftstroms aus dem Trommelelement. Insbesondere versteht der Fachmann unter "Vorderseite" für eine anspruchsgemäße Vorrichtung diejenige Seite, die die Öffnungsklappe aufweist. Dabei kann diese Öffnungsklappe in einer sachgemäß aufgestellten Vorrichtung bspw. im geschlossenen Zustand der Öffnungsklappe auch horizontal oder schräg ausgerichtet sein.

Weiterhin ist es vorstellbar, dass das Dichtelement zwei Gummilippen umfasst, wobei die eine Gummilippe drehfest an der Außenseite des Trommelelements angeordnet ist und die zweite Dichtlippe drehfest an einer Innenseite des Rohrelements angeordnet ist und im montierten Zustand kontaktieren die beiden Trommelelemente, um den Zwischenraum abzudichten. Dadurch vermeidet man, dass eine Reibung unmittelbar am Trommelelement erfolgt.

Zweckmäßig ist es vorgesehen, dass das Rohrelement und/oder das Trommelelement in einem Kontaktbereich, in dem das Dichtungselement das Rohrelement und/oder das Trommelelement kontaktiert, zumindest bereichsweise mit einer Beschichtung, vorzugsweise mit einer Kunststoffbeschichtung, versehen ist. Mit einer solchen Vorrichtung ist es in vorteilhafter Weise möglich, mittels der Beschichtung zu verhindern, dass während des ersten Zustands durch die Reibwirkung während der Rotation des Trommelelements Schäden oder Abnutzungen an der Außenseite des Trommelelements auf Dauer entstehen. Insbesondere ist es vorstellbar, dass mittels einer kunststoffförmigen Beschichtung die Kooperation zwischen der Beschichtung und dem Dichtelement auf Dauer verbessert wird und die Abdichtung insbesondere mit der Zeit verstärkt wird. Es ist auch denkbar, mit der Kunststoffbeschichtung die Reibung zwischen dem Trommelelement bzw. dem Rohrelement und dem Dichtelement zu reduzieren. Es ist ferner vorstellbar, dass die Bürstendichtung angepasst ist an bestimmte Spezifikationen des jeweiligen Typs der Vorrichtung zum Waschen und Trocknen. Insbesondere wird die Bürstendichtung hinsichtlich ihres Materials so gewählt, dass es den zu erwartenden Belastungen durch dem Kontakt mit dem Waschmittel, Wasser, Temperaturen und/oder den mechanischen Belastungen dauerhaft standhält. Ferner ist es vorstellbar, Filter entlang des Trommelelements anzuordnen, die bevorzugt hinsichtlich ihrer Länge, Anzahl und Position optimiert sein können.

In einer besonders bevorzugten Ausführungsform ist es vorgesehen, dass zusätzlich zu dem Dichtelement ein weiteres Dichtelement in Form eines Dichtlabyrinths vorgesehen ist. Dadurch lässt sich die Abdichtung des Zwischenraums weiter verbessern, indem man die Abdichtung mittels des Dichtlabyrinths kombiniert mit dem erfindungsgemäßen Dichtelement. Beispielsweise ist es vorstellbar, dass das Dichtlabyrinth an den Stirnseiten bzw. Abschlussflächen des Trommelelements bzw. des Rohrelements ausgebildet ist.

Vorzugsweise ist es vorgesehen, das Rohrelement und/oder das Trommelelement eine umlaufende Nut aufweist, in die das erste Ende und/oder das zweite Ende des Dichtelements eingreift. Mittels einer solchen Nut ist es in vorteilhafter Weise möglich, das kontaktierende bzw. aufliegenden Ende des Dichtelements zu führen und zu vermeiden, dass sich dieses bspw. umklappt oder verkantet. Vorzugsweise ist die Nut beschichtet und/oder gehärtet, um den im Betrieb erhöhten Belastungen durch das Dichtelement entgegenzuwirken bzw. um eine Reibung zu reduzieren.

Zweckmäßig ist es vorgesehen, dass das ausgebildete Dichtelement eine Vielzahl von Borsten umfasst, die im Dichtelement eine Schlaufe bilden. Insbesondere hat sich herausgestellt, dass eine derartige schlaufenförmige Ausbildung der Borsten eine flexible Ausrichtung der freien Enden der Borsten ermöglicht, wobei die freien Enden der Borsten in Kontakt stehen mit dem Rohrelement und/oder dem Trommelelement. Ferner ist es vorgesehen, dass die Schlaufe ein ringförmiges Kernelement, insbesondere ein ringförmiges Drahtelement umschließt, wobei mittels eines Klemmelements insbesondere eines teilringförmigen Keinelement hülsenartig die Schleife der Borsten an das Kernelement angebunden ist. Die Schlaufe mit dem hülsenartigen Klemmelement ist dann wiederum von einem zweiteiligen Gehäuse umgeben, dass gegenüber dem aus dem Stand der Technik bekannten Borsteneinrichtung so dimensioniert ist, dass eine vergleichsweise kurze Dimensionierung in radialer Richtung der Bürstendichtung möglich ist. Insbesondere umfasst das Gehäuse einen ersten Gehäuseteil und einen zweiten Gehäuseteil, die an einem Ende, das den freien Enden der Borste gegenüberliegt, überlappen und übereinandergeschlagen sind und wobei das erste Gehäuseteil das zweite Gehäuseteil am gegenüberliegenden Ende eine Öffnung aufweisen, durch die die freien Enden der Borsten durchgreifen können. Zum Beispiel sind die Borsten aus Metall, wie z. B. Haynes 25, oder synthetisch, wie z. B. aus einem Polymer oder Aramid. Weiterhin sind die Borsten an ihren freien Enden schräg anliegenden an der abzudichtenden Kontaktfläche. Ferner sind die Borsten an ihrem freien Ende um einen Winkel von 20° oder 45° geneigt gegenüber der Rotationsachse.

Ein weiterer Aspekt der vorliegenden Erfindung ist ein Verfahren zum Betreiben einer erfindungsgemäßen Vorrichtung, wobei im zweiten Zustand Luft in das Trommelelement geleitet wird und durch das Dichtelement am Durchströmen des Zwischenraums gehindert wird. Die für die Vorrichtung geschriebenen Merkmale und Vorteile gelten in analoger Weise für das Verfahren und andersrum.

Weitere Vorteile und Merkmale ergeben sich aus der nachfolgenden Beschreibung bevorzugter Ausführungsformen des erfindungsgemäßen Gegenstands mit Bezug auf die beigefügte Figur. Einzelne Merkmale der einzelnen Ausführungsform können dabei im Rahmen der Erfindung miteinander kombiniert werden.

Es zeigt:
Fig. 1: eine Vorrichtung zu Waschen und Trocknen gemäß einer bevorzugten Ausführungsform der vorliegenden Erfindung
Fig. 2 ein Dichtelement in einer Schnittansicht für die Vorrichtung aus Figur 1
Fig. 3 das Dichtelement aus Figur 2 in einer Draufsicht
Fig. 4 ein Flussdiagramm zur Illustration eines Verfahrens gemäß einer bevorzugten Ausführungsform der vorliegenden Erfindung.

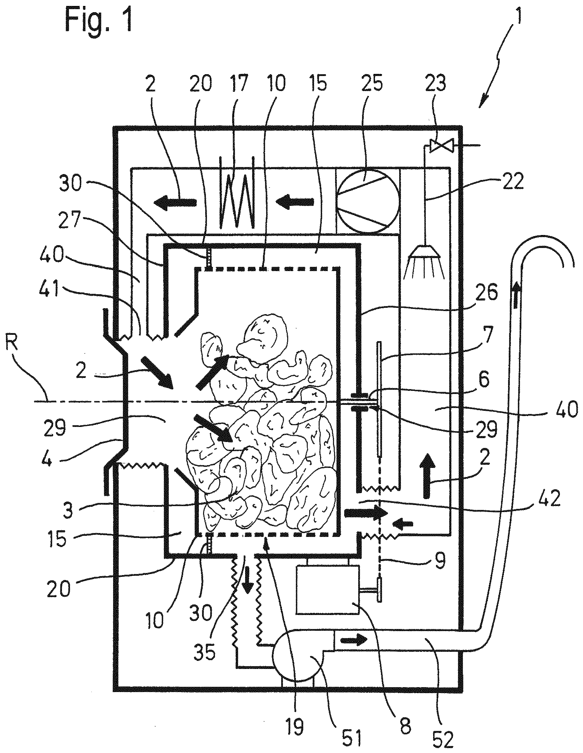

In Figur 1 ist eine Vorrichtung 1 zum Waschen und Trocknen von zu waschenden und trocknenden Objekten 3 gemäß einer bevorzugten Ausführungsform der vorliegenden Erfindung dargestellt. Eine solche Vorrichtung 1 ist beispielsweise als Wäschetrockner bekannt, in dem z.B. Kleidungsstücke als Objekte 3 sowohl gewaschen als auch getrocknet werden können. Wesentliche Bestandteile einer solchen Vorrichtung 1 sind ein Trommelelement 10 und ein Rohrelement 20, wobei das Trommelelement 10 in dem Rohrelement 20 um eine Rotationsachse R rotierbar gelagert ist. Insbesondere zeichnet sich die Vorrichtung 1 zum Waschen und Trocknen dadurch aus, dass es zwischen einem ersten Zustand zum Waschen und einem zweiten Zustand zum Trocknen der Objekte 3 überführbar ist. Insbesondere ist es vorgesehen, dass im ersten Zustand das Trommelelement 10 um die Rotationsachse R rotiert, während in einem zweiten Zustand ein Luftstrom 2, insbesondere ein Heißluftstrom, durch das Trommelelement 10 hindurchgeführt wird und dem Objekt 3 ihre Feuchtigkeit entzieht.

Für den Betrieb im ersten Zustand umfasst die Vorrichtung 1 vorzugsweise eine Antriebseinheit 8, die über ein Kraftübertragungsmittel 9, vorzugsweise einen Riemen, das Trommelelement 10 zur Rotation veranlasst. Hierzu versetzt das Kraftübertragungsmittel 9 im ersten Zustand beispielsweise ein Schwungrad 7 in Rotation. Das Schwungrad 7 ist drehfest mit einer Welle 6 verbunden, die durch eine erste, d. h. hintere, Abschlussfläche 26 des Rohrelements 20 hindurchgreift und in dieser rotierbar gelagert ist, sodass im ersten Zustand das in Rotation versetzte Schwingrad 7 das Trommelelement 10 zur Rotation antreibt. Ferner umfasst die Vorrichtung 1 eine Öffnungsklappe 4, die sich im Nichtbetrieb der Vorrichtung 1 vorzugsweise öffnen lässt und so freien Zugang zum Inneren des Trommelelements 10 gibt, sodass Objekte 3, insbesondere Kleidungsstücke, Handtücher oder vergleichbares in das Trommelelement 10 eingefügt werden können.

Im zweiten Zustand ist es bevorzugt vorgesehen, dass die im Trommelelement 10 angeordneten Objekte 3 mittels eines Luftstroms 2, insbesondere eines Heißluftstroms, getrocknet werden. Hierzu umfasst die Vorrichtung 1 einen Zirkulationskanal 40, der einen Eintrittsbereich 41 zum Einleiten des Luftstroms 2 in das Trommelelement 10, und einen Austrittsbereich 42 zum Austritt des Luftstroms 2 aus dem Trommelelement 10 aufweist. Dabei sind der Eintrittsbereich 41 und der Austrittsbereich 42 bezogen auf das Trommelelement 10, insbesondere in axialer Richtung bezogen auf die Rotationsachse R, auf gegenüberliegenden Seiten ausgebildet. Insbesondere ist es vorstellbar, dass der Eintrittsbereich 41 und/oder der Austrittsbereich 42 Teil des Rohrelements 20 ist, insbesondere eingelassen in die erste Abschlussfläche 26 und/oder eine zweite Abschlussfläche 27 des Rohrelements 20, in dem das Trommelelement 10 rotierbar gelagert ist. Für die Zirkulation des Luftstroms bzw. der Luftströmung 2 ist es insbesondere vorgesehen, dass der Zirkulationskanal 40 den Austrittsbereich 42 mit dem Eintrittsbereich 41 außerhalb des Rohrelements 20 verbindet. Dadurch ist es möglich, dass der aus dem Trommelelement 10 austretende Luftstrom 2 erneut dem Eintrittsbereich 41 zugeführt werden kann, so dass sie anschließend erneut durch die Objekte 3 zum Trocknen hindurchgeführt werden kann. Zum Aufarbeiten des zirkulierenden Luftstroms 2 weist der Zirkulationskanal 40 einen Verdichter 25 sowie ein Heizelement 17 auf, mit dem er zirkulierende Luftstrom wieder aufgewärmt werden kann, um einen trocknenden Effekt auf die Objekte 3 in dem Trommelelement 10 zu erzielen. Ferner weist der Zirkulationskanal 40 eine Wasserauslassvorrichtung 22 auf, die insbesondere mit einem Ventil 23 steuerbar ist.

Insbesondere ist es vorgesehen, dass der Zirkulationskanal 40 zusammen mit dem Trommelelement 10 einen geschlossenen Kreislauf für die Luftströmung 2 bildet. Weiterhin ist es vorgesehen, dass das Rohrelement 20, insbesondere in einer Mantelfläche des Rohrelements, eine Auslassöffnung 35 zum Abführen des Wassers vorsieht, das beispielsweise mittels der Wasserauslassvorrichtung 22 in den Zirkulationskanal 40 eingeführt wird. Zum Abführen dieses Wassers ist insbesondere ein Pumpelement 51 vorgesehen, das über eine Abführleitung 52 eben dieses Wasser, insbesondere Schmutzwasser, wieder aus der Vorrichtung 1 zum Waschen und Trocknen abführt.

Weiterhin ist es vorgesehen, dass der Zirkulationskanal 40 um das Rohrelement 20 herumgeführt wird. Dabei bildet das Rohrelement 20 im Wesentlichen eine Vermantelung zum Trommelelement 10, die gegenüber dem Trommelelement 10 orts- und bewegungsfest montiert ist. Das Rohrelement 20 umfasst insbesondere eine zylinderförmige Mantelfläche, die auf gegenüberliegenden Seiten mit jeweiligen Abschlussflächen, d. h. einer ersten Abschlussfläche 26 und einer zweiten Abschlussfläche 27, begrenzt ist, wobei diese Abschlussflächen 26, 27 Aussparungen 29 aufweisen. Insbesondere ist eine zur Öffnungsklappe 4 zugewandte Aussparung 29 in der zweiten Abschlussfläche 27 des Rohrelements 20 zur Aufnahme der Objekte 3 vorgesehen und auf der gegenüberliegenden ersten Abschlussfläche 26 ist eine Aussparung 29 zur Lagerung der Welle 6 zur Rotationslagerung des Trommelelements 10 vorgesehen, sowie ein Bereich, der für den Austrittsbereich 42 vorgesehen ist.

Weiterhin ist es vorgesehen, dass das Trommelelement 10 Öffnungen 19, beispielsweise in Form von groben Perforationen, aufweist, die als Auslass der Waschflüssigkeit während des ersten Zustandes dienen. Wegen der rotierenden Lagerung des Trommelelements 10 im Rohrelement 20, die wegen der Doppelfunktionalität der Vorrichtung 1 erforderlich ist, bildet sich ein Zwischenraum 15 zwischen dem Rohrelement 20 und dem Trommelelement 10 aus. Um zu verhindern, dass im zweiten Zustand, d.h. beim Trocknen der Objekte 3 innerhalb des Trommelelements 10, der Luftstrom 2, der über den Zirkulationskanal 40 dem Trommelelement 10 zugeführt wird, zumindest teilweise innerhalb des Zwischenraums 15 geführt wird und so die Trocknungseffizienz signifikant verschlechtert, ist ein Dichtelement 30 vorgesehen. Dieses Dichtelement 30 ist vorzugsweise in dem Teil des Zwischenraums 15 angeordnet, der sich in radialer Richtung bezogen auf die Rotationsachse R zwischen Rohrelement und Trommelelement erstreckt, d. h. das Dichtelement grenzt weder an die erste Abschlussfläche 26 noch an die zweite Abschlussfläche 27 an. D. h. das Dichtelement ist nicht zwischen der jeweiligen Stirnfläche und der Abschlussfläche 26, 27 angeordnet. Insbesondere ist das Dichtelement 30 so angeordnet, dass es das Trommelelement 10 umschließt, d. h. einmal umlaufend vollständig umgibt. In dem in Figur 1 dargestellten Ausführungsbeispiel ist das Dichtelement 30, insbesondere in dem Bereich des Trommelelements 10 angeordnet, der in axialer Richtung bezogen auf die Rotationsachse R gesehen, der Öffnungsklappe 4 zugewandt ist. Besonders bevorzugt ist es vorgesehen, dass das Dichtelement 30 am dem der Öffnungsklappe 4 abgewandten Ende des Trommelelements 10 dieses umschließt. Beispielsweise ist es vorstellbar, dass das Trommelelement 10 in axialer Richtung gesehen hinter dem Dichtelement 30, welches das Trommelelement 10 umschließt, keine weiteren Öffnungen 19 und/oder Perforationen zum Auslass der Flüssigkeit während des ersten Zustandes aufweist, sodass vorteilhafterweise ein Abdichtung des Zwischenraums 15 weiter erhöht werden kann.

Insbesondere handelt es sich bei dem vorliegenden Dichtelement 30 um kein Dichtlabyrinth, sondern um ein Dichtelement 30, das insbesondere mit einem ersten Ende die Innenseite des Rohrelements 20 mit einem zweiten Ende eine Außenseite des Trommelelements 10 kontaktiert. Vorzugsweise handelt es sich bei dem Dichtelement 30 um ein ringförmiges Dichtelement 30, das das Trommelelement 10 umlaufend, insbesondere vollständig umlaufend, abdichtet, um zu verhindern, dass der Luftstrom 2, der zum Trocknen der Objekt 3 vorgesehen ist, über den Zwischenraum 15 das Innere des Trommelelements 10 umgeht und somit nicht wirkungsvoll zum Trocknen der Wäsche beiträgt. Dies trifft insbesondere für voll beladene Wäschetrommeln zu, in denen die im Trommelelement angeordneten Objekte selbst eine Dichtwirkung auf den Luftstrom bedingt.

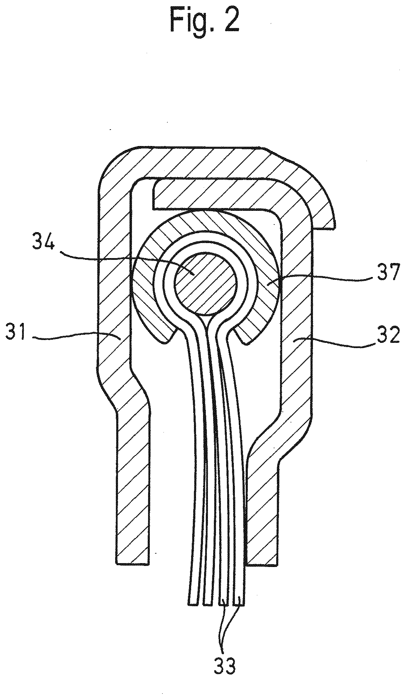

In Figur 2 ist in einer Schnittansicht ein beispielhaftes Dichtelement 30 dargestellt für eine Vorrichtung 1 gemäß Figur 1. Insbesondere handelt es sich hierbei um eine Bürstendichtung. In der dargestellten Ausführungsform dieser Bürstendichtung sind insbesondere Borsten 33 vorgesehen, die eine Schlaufe bilden, sodass die Borstenenden der jeweiligen Borsten 33 in dieselbe Richtung ausgerichtet sind. Im Bereich der Schlaufe der Borsten 33 umgreifen die Borsten 33 dabei ein Kernelement, insbesondere ein Drahtelement 34, und sind mit einem Klammerelement 37 an eben diesem Drahtelement 34 fixiert. Ferner ist es vorgesehen, dass das Klammerelement 37, insbesondere ein c-förmiges bzw. u-förmiges Klammerelement, und die Borsten 33, die eine Schlaufe um das Drahtelement 34 bilden, von einem zweiteiligen Gehäuse umgeben sind, wobei ein erster Gehäuseteil 31 und ein zweiter Gehäuseteil 32 derart ausgeformt sind, dass an einer ersten Seite das erste Gehäuseteil 31 und das zweite Gehäuseteil 32 den Schlaufenbereich mit der Klammerelement 37 umgreifen und auf der der ersten Seite gegenüberliegenden zweiten Seite parallel zu einander ausgerichtet sind, sodass sie eine Öffnung bilden, durch die die offenen Enden der Borsten 33 hinausragen. Eine solche Borstendichtung zeichnet sich durch ihre besonders hohe Flexibilität hinsichtlich der Ausrichtung der einzelnen Borsten aus, und erweist sich insbesondere vorteilhaft für das Dichtungsvermögen. Gegenüber einer Labyrinth-Dichtung lässt sich so eine bis zu 80% bessere Abdichtung des Zwischenraums 15 zwischen dem Rohrelement 20 und dem Trommelelement 10 erzielen.

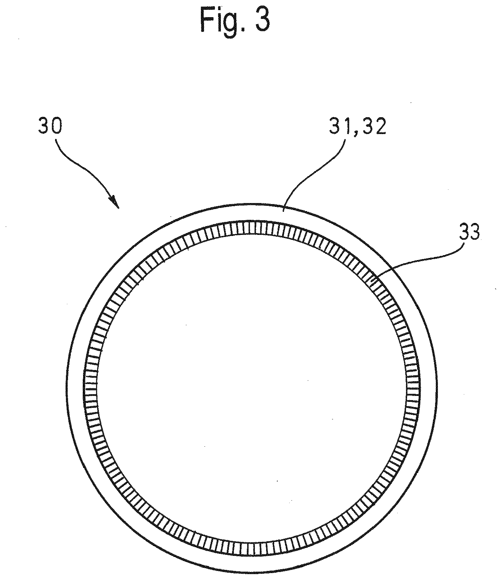

In Figur 3 ist ein ringförmiges Dichtelement 30 dargestellt, das insbesondere an seiner Innenseite durch die offenen Enden der Borsten 33 ausgebildet ist, die unter Verwendung des für Figur 2 beschriebenen Kern- bzw. Drahtelement 34 mit dem Klammerelement 37 in dem zweiteiligen Gehäuseteil 31, 32 angeordnet sind.

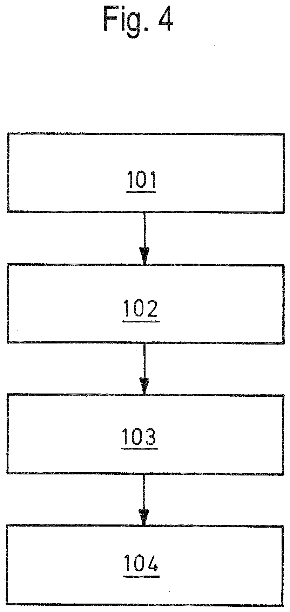

In Figur 4 ist ein Flussdiagramm für ein Verfahren zum Betrieb der Vorrichtung 1 aus den Figuren 1 bis 3 dargestellt. Dabei umfasst das Verfahren insbesondere ein Einbringen 101 der Objekte 3 in das Trommelelement 10 sowie ein Waschen 102 der Objekte 3 und ein Trocknen 103 der Objekte 3. Nach dem Trocknen 103 ist eine Entnahme 104 der Objekte 3 aus dem Trommelelement 10 vorgesehen. Vorzugsweise ist es in einer beispielhaften Ausführungsform vorgesehen, dass das Dichtelement 30 zwischen zwei Zuständen überführbar ist. Insbesondere ist das Dichtelement 30 derart konfiguriert, dass in einem Primärzustand das Dichtelement 30 beabstandet ist zum Trommelelement 10 und während des Sekundärzustands in Kontakt ist mit dem Trommelelement 10. Mit anderen Worten: Während im Sekundärzustand eine Abdichtung des Zwischenraums 15 realisiert wird, wird diese Abdichtung während des Primärzustandes, zumindest teilweise aufgehoben. Dies ist insbesondere dann von Vorteil, wenn der Primärzustand im ersten Zustand der Vorrichtung 1 eingenommen wird, d. h. dann, wenn das Trommelelement 10 beim Waschen rotiert. Dadurch wirkt das Dichtelement 30 nicht länger als Reibwiderstand, der einer Rotation entgegenwirkt. Gleichzeitig lässt sich dann in einem Sekundärzustand während des zweiten Zustands der Vorrichtung, d. h. während des Trocknens, die abdichtende Wirkung für den Zwischenraum 15 bereitstellen. Beispielsweise lässt sich eine Überführung zwischen dem Primär- und Sekundärzustand durch eine Vergrößerung oder Verkleinerung des Durchmessers des ringförmig ausgebildeten Dichtelements 30 realisieren. Es ist aber auch vorstellbar, dass das Dichtelement 30 zweiteilig ausgebildet ist, so dass die zwei Teile des Dichtelements 30 für den Primärzustand auseinandergefahren werden und für den Sekundärzustand zusammengefahren werden, um das beschriebene Verfahren zu realisieren.

### Bezugszeichenliste:

- 1: Vorrichtung
- 2: Luftstrom
- 3: Objekte
- 4: Öffnungsklappe
- 6: Welle
- 7: Schwungrad
- 8: Antriebseinrichtung
- 9: Kraftübertragungsmittel
- 10: Trommelelement
- 15: Zwischenraum
- 17: Heizelement
- 19: Öffnung
- 20: Rohrelement
- 22: Wasserauslassvorrichtung
- 23: Ventil
- 25: Verdichter
- 26: Erste Abschlussfläche
- 27: Zweite Abschlussfläche
- 29: Aussparung
- 30: Dichtelement
- 31: erstes Gehäuseteil
- 32: zweite Gehäuseteil
- 33: Borste
- 34: Drahtelement
- 35: Auslassöffnung
- 40: Zirkulationskanal
- 41: Eintrittsbereich
- 42: Austrittsbereich
- 51: Pumpenelement
- 52: Abfuhrleitung
- 101: Einbringen
- 102: Waschen
- 103: Trocknen
- 104: Entnahme
- R: Rotationsaches

## Patentansprüche

1. Vorrichtung (1) zum Waschen und Trocknen von zu waschenden und zu trocknenden Objekten (3), insbesondere Kleidungsstücken, wobei die Vorrichtung (1) zwischen einem ersten Zustand zum Waschen und einem zweiten Zustand zum Trocknen überführbar ist, umfassend
- ein Trommelelement (10) zur Aufnahme der Objekte (3),
- ein Rohrelement (20), wobei das Trommelelement (10) in dem Rohrelement (20) um eine Rotationsachse (R) rotierbar gelagert ist, und
- ein Zwischenraum (15), der sich zwischen dem Rohrelement (20) und dem Trommelelement (10) ausbildet,
**dadurch gekennzeichnet, dass** zur Reduktion und/oder Vermeidung eines Luftstroms im Zwischenraum (15) im zweiten Zustand der Vorrichtung (1) der Zwischenraum (15) mit einem das Trommelelement (10) umgebenden Dichtelement (30) abgedichtet ist.

2. Vorrichtung (1) gemäß Anspruch 1, wobei das Dichtelement (30) mit einem ersten Ende mit dem Rohrelement (20) und/oder mit einem zweiten Ende mit dem Trommelelement (10) verbunden ist und/oder wobei das Dichtelement (30) bogen- oder ringförmig ausgebildet ist.

3. Vorrichtung (1) gemäß Anspruch 1, wobei das Dichtelement (30) elastisch deformierbar ist.

4. Vorrichtung (1) gemäß einem der vorhergehenden Ansprüche, wobei das Dichtelement (30), bezogen auf die Rotationsachse (R), in dem sich in radialer Richtung zwischen dem Rohrelement (20) und dem Trommelelement (10) erstreckenden Zwischenraum (15) angeordnet ist.

5. Vorrichtung (1) gemäß einem der vorhergehenden Ansprüche, wobei das Dichtelement (30) eine Bürstendichtung und/oder eine Gummilippe umfasst.

6. Vorrichtung (1) gemäß einem der vorhergehenden Ansprüche, wobei das Rohrelement (20) und/oder das Trommelelement (10) in einem Kontaktbereich, in dem das Dichtelement das Rohrelement (20) und/oder das Trommelelement (10) kontaktiert bzw. aufliegt, zumindest bereichsweise mit eine Beschichtung versehen ist.

7. Vorrichtung (1) gemäß einem der vorhergehenden Ansprüche, wobei das Rohrelement (20) und/oder das Trommelelement (10) eine umlaufende Nut aufweist, in die das erste Ende und/oder das zweite Ende des Dichtelements (30) eingreift.

8. Vorrichtung (1) gemäß einem der vorhergehenden Ansprüche, wobei zusätzlich zu dem Dichtelement (30) ein weiteres Dichtelement in Form eines Dichtlabyrinths vorgesehen ist.

9. Vorrichtung gemäß einem der Ansprüche 5 bis 8, wobei das als Bürstendichtung ausgebildete Dichtelement (30) eine Vielzahl von Borsten umfasst, die im Dichtelement (30) eine Schlaufe bilden.

10. Verfahren zum Betreiben einer Vorrichtung (1) gemäß einem der vorhergehenden Ansprüche, wobei im zweiten Zustand Luft in das Trommelelement (20) geleitet wird und durch das Dichtelement (30) am Durchströmen des Zwischenraums (15) gehindert wird.

## Claims

1. Device (1) for washing and drying objects (3) to be washed and dried, in particular items of clothing, wherein the device (1) can be transferred between a first state for washing and a second state for drying, comprising
- a drum element (10) for receiving the objects (3),
- a tube element (20), wherein the drum element (10) is rotatably mounted in the tube element (20) about an axis of rotation (R), and
- an intermediate space (15) which is formed between the tube element (20) and the drum element (10),
**characterised in that** the intermediate space (15) is sealed with a sealing element (30) which surrounds the drum element (10) in order to reduce and/or avoid an air flow in the intermediate space (15) in the second state of the device (1).

2. Device (1) according to claim 1, wherein the sealing element (30) is connected with a first end to the tube element (20) and/or with a second end to the drum element (10) and/or wherein the sealing element (30) is curved or ring-shaped.

3. Device according to claim 1, wherein the sealing element (30) can be deformed elastically.

4. Device (1) according to one of the preceding claims, wherein the sealing element (30) is arranged in the intermediate space (15) which extends in the radial direction between the tube element (20) and the drum element (10) in relation to the axis of rotation (R).

5. Device according to one of the preceding claims, wherein the sealing element (30) comprises a brush seal and/or a rubber lip.

6. Device (1) according to one of the preceding claims, wherein the tube element (20) and/or the drum element (10) is provided, at least in sections, with a coating in a contact region in which the sealing element makes contact with or rests upon the tube element (20) and/or the drum element (10).

7. Device (1) according to one of the preceding claims, wherein the tube element (20) and/or the drum element (10) has a circumferential groove into which the first end and/or the second end of the sealing element (30) engages.

8. Device (1) according to one of the preceding claims, wherein, in addition to the sealing element (30), a further sealing element is provided in the form of a sealing labyrinth.

9. Device according to one of claims 5 to 8, wherein the sealing element (30) embodied as a brush seal comprises a plurality of bristles, which form a loop in the sealing element (30).

10. Method for operating a device (1) according to one of the preceding claims, wherein in the second state air is routed into the drum element (20) and is prevented from flowing through the intermediate space (15) by the sealing element (30).

## Revendications

1. Dispositif (1) de lavage et de séchage d'objets (3) à laver et à sécher, en particulier de pièces de vêtement, dans lequel le dispositif (1) peut passer d'un premier état pour le lavage à un deuxième état pour le séchage, comprenant :
- un élément formant tambour (10) recevant les objets (3),
- un élément tubulaire (20), l'élément formant tambour (10) se trouvant, dans l'élément tubulaire (20) tournant autour d'un axe de rotation (R), et
- un espace intermédiaire (15) formé entre l'élément tubulaire (20) et l'élément formant tambour (10),
**caractérisé en ce que** pour réduire et/ou éviter un courant d'air dans l'espace intermédiaire (15) dans le deuxième état du dispositif (1), l'espace intermédiaire (15) est rendu étanche à l'aide d'un élément formant joint (30) entourant l'élément formant tambour (10).

2. Dispositif (1) selon la revendication 1, dans lequel l'élément formant joint (30) est raccordé par une première extrémité à l'élément tubulaire (20) et/ou par une deuxième extrémité, à l'élément formant tambour (10), et/ou dans lequel l'élément formant joint (30) est réalisé sous forme arquée ou annulaire.

3. Dispositif (1) selon la revendication 1, dans lequel l'élément formant joint (30) est élastiquement déformable.

4. Dispositif (1) selon l'une des revendications précédentes, dans lequel l'élément formant joint (30), par rapport à l'axe de rotation (R), se trouve dans l'espace intermédiaire (15) qui s'étend dans la direction radiale entre l'élément tubulaire (20) et l'élément formant tambour (10).

5. Dispositif (1) selon l'une des revendications précédentes, dans lequel l'élément formant joint (30) comprend un joint-brosse et/ou une lèvre en caoutchouc.

6. Dispositif (1) selon l'une des revendications précédentes, dans lequel l'élément tubulaire (20) et/ou l'élément formant tambour (10) est pourvu au moins en partie d'un revêtement dans une zone de contact, dans laquelle l'élément formant joint touche resp. appuie sur l'élément tubulaire (20) et/ou l'élément formant tambour (10).

7. Dispositif (1) selon l'une des revendications précédentes, dans lequel l'élément tubulaire (20) et/ou l'élément formant tambour (10) présente une rainure périphérique, dans laquelle la première extrémité et/ou la deuxième extrémité de l'élément formant joint (30) s'engage.

8. Dispositif (1) selon l'une des revendications précédentes, dans lequel, en plus de l'élément formant joint (30), un autre élément formant joint, sous forme d'un joint labyrinthe, est prévu.

9. Dispositif selon l'une des revendications 5 à 8, dans lequel l'élément formant joint (30) réalisé en tant que joint-brosse, comprend une pluralité de brosses qui forment dans l'élément formant joint (30), une boucle.

10. Procédé de fonctionnement d'un dispositif (1) selon l'une des revendications précédentes, dans lequel, dans le deuxième état, de l'air est conduit dans l'élément formant tambour (20) et l'élément formant joint (30) évite une pénétration dans l'espace intermédiaire (15).
